# EUROPÄISCHE PATENTSCHRIFT

(11) **EP 0 824 383 B1**
(45) Veröffentlichungstag und Bekanntmachung des Hinweises auf die Patenterteilung: **24.03.1999**
(21) Anmeldenummer: 95928449.8
(22) Anmeldetag: 24.07.1995
(51) Int. Cl.: B21D 39/04

(54) **PRESSWERKZEUG UND VERFAHREN ZUM VERBINDEN VON ROHRFÖRMIGEN ELEMENTEN**
PROCESS AND PRESSING TOOLS FOR JOINING TUBULAR ELEMENTS
PROCEDE ET OUTILS DE COMPRESSION SERVANT A RELIER DES ELEMENTS TUBULAIRES

(30) Priorität: 08.05.1995 DE 19516830
(43) Veröffentlichungstag der Anmeldung: 25.02.1998
(73) Patentinhaber: VERITAS GUMMIWERKE AG, 63571 Gelnhausen (DE)
(72) Erfinder: GEIMER, Joachim, D-63571 Gelnhausen (DE); ZÜLCH, Wilfried, D-63571 Gelnhausen (DE)
(74) Vertreter: Grünecker, Kinkeldey, Stockmair & Schwanhäusser Anwaltssozietät
(86) Internationale Anmeldenummer: EP9502918
(87) Internationale Veröffentlichungsnummer: WO9635526

(56) Entgegenhaltungen:
- FR-A- 1 199 258
- GB-A- 680 080
- GB-A- 2 084 063
- US-A- 4 989 443

## Beschreibung

Die Erfindung betrifft ein Preßwerkzeug und ein Verfahren zum Verbinden eines rohrförmigen Elements mit einem im Inneren angeordneten, dem Innendurchmesser im wesentlichen angepaßten Element. Als nächsthommender Stand der Technik ist die US-A-4 989 443 anzusehen.

In der Regel werden Schläuche mittels einer Preßhülse mit Rohren oder speziell geformten Stutzen unter Zuhilfenahme einer Mehrbacken-Preßvorrichtung verbunden. Bei dieser Verbindungstechnik entstehen zwischen den einzelnen Preßbacken sogenannte Preßspalte.

Herkömmlicherweise ist es auch bekannt, um z.B. eine dichte Verbindung von Schläuchen bzw. Schlauchkrümmern mit Anschlußarmaturen bzw. Metall- oder Kunststoffrohren zu erzielen, einen Rohrkörper in ein Schlauchende einzustecken, eine Blechhülse außen auf das Schlauchende aufzuschieben und diese in einer Presse mit mehreren bewegbaren Preßbacken gegen den Rohrkörper einzuschnüren, um die Schlauchwand zu komprimieren. Damit zwischen dem Außenumfang des Rohrkörpers und der Schlauchwand ausreichende Dichtheit erreicht wird, werden sogar zwei nebeneinanderliegende Einschnürungen aus über dem Umfang umlaufenden Reihen von Vertiefungen durchgeführt. Diese Verbindung führt jedoch insbesondere bei starken Temperaturschwankungen und unter starken Erschütterungen der Schlauchverbindung zu Undichtigkeiten.

Ferner ist aus der DE-B-1 675 221 eine nichtlösbare Rohrverbindung für Metallrohre bekannt. Hierbei wird die Verbindung durch eine metallischen rohrförmige Hülse erzielt, die nach der Verbindung der Metallrohre auf der Verbindungsstelle verbleibt. Die Hülse selbst besteht aus einem äußeren Druckring und einer inneren Hülse, wobei zwischen diesen beiden Teilen eine Ringkammer entsteht. Um zwei Metallrohre miteinander zu verbinden, wird die Hülse über beide Rohrenden geschoben und anschließend Druck durch eine Einlaßöffnung in die ringförmige Kammer zugeführt, und durch den Druck eine ringsherum verlaufenden Verformung, der um die Metallenden angeordneten inneren Hülse erzielt. Um eine dichte Verbindung zwischen den Metallrohren zu erzielen, ist ferner ein Dichtungsring aus synthetischem oder natürlichen, elektrisch isolierenden Dichtungsmaterial vorgesehen, der von einer kreisförmigen Rinne zwischen zu den verbindenden Metallrohren und der inneren Hülse aufgenommen wird. Sowohl das Dichtungsmaterial bzw. Dichtungsring als auch die Metallhülse verbleiben nach der Verbindung der Metallrohre an der Verbindungsstelle.

Desweiteren ist z.B. aus der EP-A 134 566 bekannt, die Verbindung zweier Rohre durch eine radiale Verformung der zu verbindenden rohrförmigen Elemente zu erzielen. Bei dem beschriebenen Verfahren werden mit Hilfe einer Vorrichtung in der mehrere Rollen rings um die zu verbindenden Rohre angeordnet sind, mehrere radial verlaufenden Nuten an der Verbindungsstelle angeordnet. Diese Vorrichtung nimmt aufgrund des speziellen Aufbaus einen relativ großen Bereich um die zu verbindenden Teile herum ein, um die vollständige Verbindung sicherzustellen.

Ferner ist aus der EP-A 218 049 eine Dichtung für röhrenförmige Elemente bekannt, bei welcher in ein Metallrohr eine Buchse zum Abdichten eingeführt wird. Die Dichtung wird hierbei pber ein deformierbares Material erzielt, das an der Außenseite der Buchse in Kontakt mit der Innenfläche des röhrförmigen Elementes angeordnet wird. Wird eine Kraft, z.B. ein Druck auf das deformierbare Material ausgeübt, verformt es sich radial und wird fest, bzw. abdichtend an die Innenflächen des rohrförmigen Elementes gedrückt wird.

Es ist folglich bisher nicht möglich eine dichte Verbindung zweier metallischer Rohre bzw. eines Rohres und eines beliebigen weiteren Elements z.B. eines Schlauches zu erzielen, ohne den Einsatz einer sogenannte Hülse, oder ohne das während des Verbindungsverfahrens zwischen den einzelnen Preßbacken sogenannte Preßspalte an der Verbindungsstelle entstehen.

Sowohl die Preßhülse als auch die erzeugten Preßspalten sind für viele Anwendungen nachteilig, da einerseits die Verbindung unförmig wird und das Rohr durch die Preßspalte bzw. Scherwirkungen ungünstig beeinflußt wird.

Ferner ist insbesondere an schwer zugänglicher Orten der notwendige Raum zu Sicherstellung einer um den Rohrumfang vollständig dichten Verbindung häufig begrenzt, so daß den bekannten Werkzeuge Grenzen gesetzt sind und die Verbindungen teilweise schon von dem Zusammenbau durchgeführt werden müssen.

Der vorliegenden Erfindung liegt daher die Aufgabe zugrunde ein Preßwerkzeug, sowie ein Verfahren zum Verbinden von Rohren mit anderen Elementen bereitzustellen, welche die Nachteile des Standes der Technik überwinden.

Erfindungsgemäß wird diese Aufgabe in Bezug auf ein Preßwerkzeug zum Verbinden eines rohrförmigen Elements mit einem im Inneren angeordneten, dem Innendurchmesser im wesentlichen angepaßten Element durch die Merkmale des Anspruchs 1 gelöst.

Das neue Preßwerkzeug ermöglicht die Verbindung bzw. die Preßung von rohrförmigen Elementes und Rohrabschnitten mit anders geformten Elementen, ohne daß das Preßwerkzeug auf speziell gegebenen Formen angepaßt werden muß und ermöglicht daher einen flexiblen Einsatz des Preßwerkzeuges. Da das Preßwerkzeug nicht mehr aufwendig an die vorhandenen Formen angepaßt werden muß, kann sowohl die Herstellung des Preßwerkzeuges, als auch des Endprodukts erheblich preiswerter durchgeführt werden.

Ferner ermöglicht der Einsatz des erfindungsgemäßen Preßwerkzeuges, insbesondere des Druckverteilungselementes, eine Verbindung der zu verbindenden Elemente durchzuführen, ohne das zwischen den einzelnen Preßbacken sogenannten Preßspalten entstehen. Die Verhinderung der Preßspalten wird dadurch ermöglicht, daß sich die durch die Preßbacken auf das sich wie eine inkompressible Flüssigkeit verhaltende Druckverteilungselement eingeleiteten Kräfte über das Druckverteilungselement zu einem quasi konstanten radialen Kräfteverlauf ausbilden.

Insbesondere der durch das Druckverteilungselement erzielte gleichmäßige Kräfteverlauf ermöglicht es Verbindungen an schwer zugänglichen Orten bzw. Bereichen zu erzielen, an denen unter Umständen nur eine einzige Preßbacke eingesetzt werden kann.

Mit den erfindungsgemäßen Preßwerkzeug lassen sich äußerst dichte Verbindungen herstellen, so daß das Preßwerkzeug für ein breites Anwendungsgebiet geeignet ist.

Gemäß einer bevorzugten Ausführungsform der vorliegenden Erfindung besteht das Druckverteilungselement aus Gummi oder aus einem Flüssigkeit gefüllten Ring.

Dieser beiden Ausführungsformen haben sich als besonders geeignet erwiesen, um einen konstanten radialen Kräfteverlauf über den Verbindungsbereich auszuüben.

Ferner kann das Drückverteilungselement an eine mit der Verbindungsstelle der zu verbindenden Elemente inkontaktstehenden Fläche des Druckverteilungselementes mit einem bestimmten Profil versehen sein.

Eine solche Vorprofillerung kann bei speziellen Anforderungen an die gewünschte Krafteinleitung- und Verteilung vorteilhaft sein.

Desweiteren hat es sich als vorteilhaft erwiesen, wenn das Preßwerkzeug Begrenzungselemente umfaßt, die seitlich neben dem Druckverteilungselementen angeordnet sind.

Solche Begrenzungselemente werden vorzugsweise eingesetzt, um die je nach Anwendungsfall gestaltete Krafteinsetzung voll auszuschöpfen. Insbesondere beim Einsatz von Druckverteilugnselementen aus Gummi oder flüssigkeitsgefüllten Ringen ist der Einsatz von Begrenzungselementen bevorzugt um ein seitliches Ausbeulen des Druckverteilungselements zu verhindern.

In einer Ausführungsform des Preßwerkzeuges kann vorgesehen sein, daß das Druckverteilungselement aus einzelnen Segmenten besteht, die direkt mit den Preßbacken verbunden sind.

Diese Ausführungsform hat sich als vorteilhaft erwiesen, wenn große Verfahrenswege von den Preßwerkzeugen zurückgelegt werden.

Gleichmaßen ermöglicht diese Ausführungsform durch den Einsatz unterschiedlicher Gummimischungen den Kräftverlauf über den Verbindungsbereich unterschiedlich zu gestalten.

In Bezug auf das Verfahren zum Verbinden eines rohrförmigen Elements mit einem im Inneren angeordneten, dem Innendurchmesser angepaßten Element wird die obengenannte Aufgabe durch die Merkmale des Anspruchs 8 gelöst.

Das erfindungsgemäße Verfahren ermöglicht eine äußerst dichte Verbindung zwischen zwei zu verbindenden Elementen zu erzielen, wobei keine Preßspalten entstehen.

Anhand der Zeichnungen werden Ausführungsformen des erfindungsgemäßen Gegenstandes sowie des erfindungsgemäßen Verfahrens erläutert.

### Es zeigen:

- Figur 1: ein mit einem Stutzen zu verbindendes Rohr in unverpreßten Zustand
- Figur 2: das in Figur 1 dargestellte Rohr während des Umformungsvorganges, und
- Figur 3: den Kräfteverlauf in dem Druckverteilungselement.

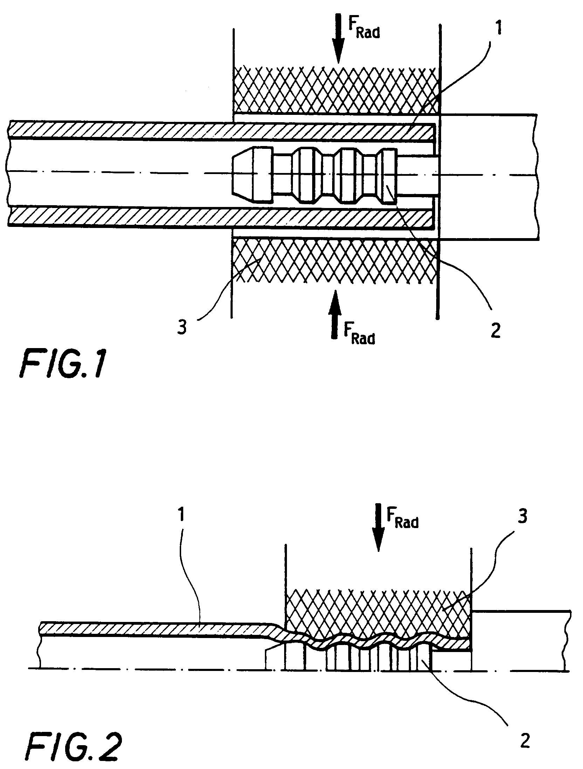

Gemäß Figur 1 soll ein Rohr 1 mit einem Stutzen 2 verbunden werden, welcher in den Rohrkörper innen eingesteckt ist. Dabei ist die Oberfläche des Stutzen über den, in den Rohrkörper eingesteckten Bereich mit einer Vielzahl von ringförmigen parallel zueinander angeordneten Nuten versehen. Das Rohr 1 besteht aus einem Nichteisenmetall z.B. Aluminium und der Stutzen 2 ist aus einem Stahl hergestellt. Sollen Teile aus diesen Materialien miteinander verbunden werden, treten aufgrund der unterschiedlichen Materialeigenschaften Probleme auf, so daß ein Verschweißen oder Verlöten nur bedingt oder gar nicht durchführbar ist.

Die Verbindung dieser beiden Elemente ist ferner aufgrund der komplizierten Form des Stutzens unter Verwendung herkömmlicher Verfahren aufwendig, da kostspielig hergestellte Preßwerkzeuge, die der Form der Stutzen angepaßt sind, notwendig sind.

Bei Einsatz von Bauteilen mit Übermaßen und fixen Verfahrensparametern kann leicht der kritische Wert zum Beulen des Stutzens (Zylinder unter Außendruck) überschritten werden. Dies führt zum Ausfall der Verbindung.

Um das Rohr 1 ist im Bereich des eingesteckten Stutzens 2 außen ein Druckverteilungselement 3 aufgeschoben, und anschließend wird über einen oder mehrere nicht dargestellte Preßbacken ein Druck auf das sich wie eine inkompressible Flüssigkeit verhaltende Druckverteilungselement und über dieses auf den Verbindungsbereich ausgeübt.

Wie aus Figur 2 deutlich wird, paßt sich die mit dem Verbindungsbereich in Kontakt stehende Fläche des Druckverteilungselementes, während auf dieses ein Druck ausgeübt wird, exakt der Form der entstehenden Verbindung an, d.h. durch das Druckverteilungselement wird es möglich ohne Einsatz eines kompliziert geformten Preßwerkzeuges gleichermaßen in dem Nutenbereichen als auch in den anderen Bereichen des Stutzens eine dichte Verbindung zu erzielen, da auf die Bereiche des Rohres 1, die mit den Nutenbereichen des Stutzens 2 zu verbinden sind, ein stärkerer Druck ausgeübt wird als auf die anderen Bereiche.

Vorzugsweise besteht das Druckverteilungselement aus Gummi, da sich dieses Material den besonderen Gegenheiten der Verbindungsstelle, insbesondere der Form anpassen kann.

Um ein seitliches Ausbeulen des Druckverteilungselements aus Gummi zu verhindern, können starre Widerlager eingesetzt werden, die als seitliche Begrenzung rechts und links neben dem Zwischenelement angeordnet sind. Auf diese Weise kann sichergestellt werden, daß der Druck gleichmäßig auf das Rohr ausgeübt wird und sich nur das Rohr verformt. Wird der Druck nur über eine einzige Preßbacke ausgeübt, hat sich der Einsatz von zusätzlichen Begrenzungselementen bewährt, mit denen ein radiales Ausbeulen des Druckelementes verhindert wird.

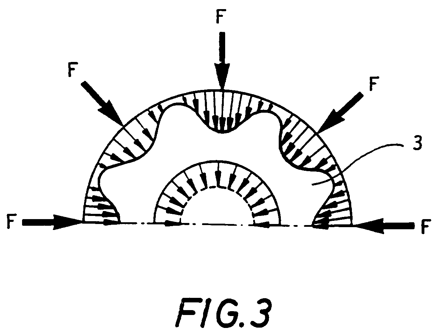

In Figur 3 ist der Kräfteverlauf des sich wie eine imkompressible Flüssigkeit verhaltende Druchverteilungselements 3 dargestellt. Wird auf die Aussenfläche, d.h. auf die der Verbindungsstelle gegenüberliegende Fläche des Druckverteilugnselementes mittels Preßbacken ein Druck ausgeübt, verformt sich die Aussenfläche des Druckverteilungselementes entsprechend der eingeleiteten Kraft. In dem Druckverteilungselement wird die eingeleitete Kraft zu einem konstanten radialen Kräfteverlauf ausgebildet, so daß über die ganze Innenfläche des Druckverteilungselementes, d.h. die mit dem Zwischenbereich in Verbindung stehende Fläche des Druckverteilungselementes eine gleichmäßige Kraft auf die Verbindung ausgeübt werden kann. Auf diese Weise ist möglich, die notwendige Formgebung der Verbindung zu erreichen, ohne das die Rohroberfläche beschädigt wird oder daß das Rohr durch Preßspalten bzw. Scherwirkungen ungünstig beeinflußt wird.

Zum Beispiel in hydraulischen Anlagen, speziell im Servolenkungsbereich, ist notwendig die Leitungen akustisch auf das Gesamtsystem abzustimmen.Dies geschieht in der Regel durch das Einbinden von Drosseln in die Schlauchleitungen. Ein Einziehen der Rohrleitung ist bislang aufgrund der geringen zulässigen Toleranzen der Drosselbohrung und der damit verbundenen hohen Maßgenauigkeit bei der Fertigung nicht möglich.

Unter Verwendung des erfindungsgemäßen Preßwerkzeuges, bzw. unter Einsatz des erfindungsgemäßen Verfahren ist es möglich eine Preßspaltenbildung auszuschließen und somit eine Drosselung des Rohres auf freier Länge.

Weitere Anwendungsmöglichkeiten des erfindungsgemäßen Preßwerkzeuges sowie des erfindungsgemäßen Verfahren sind z.B. Leitungsbau im Kraftfahrzeug, Leitungsbau in der Bauwirtschaft z.B. bei Kupferwasserrohren, Leitungsbau bei Fußbodenleitungen unter Verwendung von Mehrschichtaluminiumrohren, Elektroinstallationsrohre, Verpressen von Metallgehäusen auf Bauteile z.B. Druckregler.

## Patentansprüche

1. Preßwerkzeug umfassend Preßbacken zum Verbinden eines rohrförmigen Elements (1) mit einem im Inneren angeordnetem, dem Innendurchmesser im wesentlichen angepaßten Element (2), **dadurch gekennzeichnet, daß** das Preßwerkzeug desweiteren ein zwischen den Preßbacken und dem Außenumfang des rohrförmigen Elements (1) ringförmig angeordnetes, sich wie eine inkompressible Flüssigkeit verhaltendes Druckverteilungselement (3) umfaßt, welches ringsum den Verbindungsbereich der zu verbindenden Elemente (1; 2) angeordnet ist und den durch die Preßbacken erzeugten Preßdruck im wesentlichen auf den Außenumfang des rohrförmigen Elementes (1) verteilt.

2. Preßwerkzeug nach Anspruch 1, **dadurch gekennzeichnet, daß** das Druckverteilungselement (3) aus Gummi besteht.

3. Preßwerkzeug nach Anspruch 1, **dadurch gekennzeichnet, daß** das Druckverteilungelement (3) aus einem flüssigkeitgefüllten Ring besteht.

4. Preßwerkzeug nach einem der Ansprüche 1 bis 3, **dadurch gekennzeichnet, daß** das Druckverteilungelement (3) an einer mit der Verbindungsstelle der zu verbindenden Elemente in Kontakt stehenden Fläche des Druckverteilungselementes (3) mit einem Profil versehen ist.

5. Preßwerkzeug nach einem der Ansprüche 1 bis 4, **dadurch gekennzeichnet, daß** das Preßwerkzeug desweiteren Begrenzungselemente umfaßt, die seitlich neben den Druckverteilungselement (3) angeordnet sind.

6. Preßwerkzeug nach einem der Ansprüche 1 bis 5, **dadurch gekennzeichent, daß** das Preßwerkzeug acht Preßbacken umfaßt, die ringförmig um den Verbindungsbereich angeordnet sind.

7. Preßwerkzeug nach einem der Ansprüche 1 bis 6, **dadurch gekennzeichnet, daß** das ringförmig angeordnete Druckverteilungselement (3) aus einzelnen Segmenten besteht, die den einzelnen Preßbacken zugeordnet sind.

8. Verfahren zum Verbinden eines rohrförmigen Elements (1) mit einem im Inneren angeordneten, dem Innendurchmesser im wesentlichen angepaßten Element (2), unter Verwendung des Preßwerkzeuges gemäß Anspruch 1, wobei ein über den Umfang des rohrförmigen Elements (1) gleichmäßig verteilter Druck unter Vermeidung von Unstetigkeitsstellen ausgeübt wird.

## Claims

1. A press tool comprising press jaws for connecting a tubular element (1) to an element (2) which is arranged in the interior and is substantially adapted to the inner diameter, **characterized in** that the press tool further comprises a pressure distributing element (3) which is annularly arranged between said press jaws and the outer circumference of said tubular element (1) and exhibits the characteristics of an incompressible liquid, and which is arranged around the connecting portion of the elements (1; 2) to be connected and distributes the pressing power produced by said press jaws substantially over the outer circumference of said tubular element (1).

2. The press tool according to claim l, **characterized in** that said pressure distributing element (3) is made of rubber.

3. The press tool according to claim l, **characterized in** that said pressure distributing element (3) consists of a ring filled with liquid.

4. The press tool according to any of claims 1 to 3, **characterized in** that said pressure distributing element (3) is provided with a profile on a surface of said pressure distributing element (3) which is in contact with the connecting location of the elements to be connected.

5. The press tool according to any of claims 1 to 4, **characterized in** that said press tool further comprises boundary elements which are laterally arranged next to said pressure distributing element (3).

6. The press tool according to any of claims 1 to 5, **characterized in** that said press tool comprises eight press jaws which are annularly arranged around said connecting portion.

7. The press tool according to any of claims 1 to 6, **characterized in** that said annularly arranged pressure distributing element (3) consists of individual segments which are assigned to the individual press jaws.

8. A method for connecting a tubular element (1) to an element (2) which is arranged in the interior and is substantially adapted to the inner diameter, using the press tool according to claim 1, wherein pressure which is evenly distributed over the circumference of said tubular element (1) is exerted to the exclusion of discontinuous spots.

## Revendications

1. Outil de compression comportant des mâchoires, pour relier un élément tubulaire (1) à un élément (2) disposé à l'intérieur de celui-ci et globalement adapté au diamètre intérieur, **caractérisé** en ce que l'outil de compression comprend aussi un élément de répartition de pression (3) qui est disposé suivant une forme annulaire entre les mâchoires et la circonférence extérieure de l'élément tubulaire (1), qui se comporte comme un liquide incompressible, qui est disposé tout autour de la zone de liaison des éléments à relier (1 ; 2) et qui répartit globalement sur la circonférence extérieure de l'élément tubulaire (1) la pression produite par les mâchoires.

2. Outil de compression selon la revendication 1, **caractérisé** en ce que l'élément de répartition de pression (3) est en caoutchouc.

3. Outil de compression selon la revendication 1, **caractérisé** en ce que l'élément de répartition de pression (3) se compose d'une bague remplie de liquide.

4. Outil de compression selon l'une des revendications 1 à 3, **caractérisé** en ce que l'élément de répartition de pression (3), sur une surface en contact avec le point de liaison des éléments à relier, est pourvu d'un profil.

5. Outil de compression selon l'une des revendications 1 à 4, **caractérisé** en ce que l'outil de compression comprend également des éléments de limitation qui sont disposés latéralement près de l'élément de répartition de pression (3).

6. Outil de compression selon l'une des revendications 1 à 5, **caractérisé** en ce qu'il comprend huit mâchoires qui sont disposées suivant une forme annulaire autour de la zone de liaison.

7. Outil de compression selon l'une des revendications 1 à 6, **caractérisé** en ce que l'élément de répartition de pression (3) disposé suivant une forme annulaire se compose de segments individuels qui sont associés aux mâchoires individuelles.

8. Procédé pour relier un élément tubulaire (1) à un élément (2) disposé à l'intérieur de celui-ci et globalement adapté au diamètre intérieur, en utilisant l'outil de compression selon la revendication 1, selon lequel on exerce une pression répartie de façon homogène sur la circonférence de l'élément tubulaire (1), en évitant des points de discontinuité.
